# FASCICULE DE BREVET EUROPEEN

(11) **EP 0 537 046 B1**
(45) Date de publication et mention de la délivrance du brevet: **16.10.1996**
(21) Numéro de dépôt: 92402658.6
(22) Date de dépôt: 29.09.1992
(51) Int. Cl.: G02B 6/42, G02B 6/44, G02B 6/28, G02B 6/32

(54) **Ensemble d'interconnexion optique pour cartes électroniques**
Optisches Verbindungssystem für Elektronikplatinen
Optical interconnection assembly for electronic circuit cards

(30) Priorité: 08.10.1991 FR 9112348
(43) Date de publication de la demande: 14.04.1993
(73) Titulaire: THOMSON-CSF, 75008 Paris (FR)
(72) Inventeur: Vergnolle, Claude, THOMSON-CSF, F-92045 Paris la Defense (FR)
(74) Mandataire: Beylot, Jacques

(56) Documents cités:
- EP-A- 0 205 359
- EP-A- 0 237 237
- DE-A- 2 510 267
- DE-U- 8 508 153
- FR-A- 2 428 328
- GB-A- 2 023 928
- US-A- 3 777 154
- US-A- 3 792 239
- US-A- 4 184 740

## Description

La présente invention concerne les interconnexions entre un ensemble de cartes électroniques filles empilées dans un coffret et enfichées par la tranche sur des connecteurs électriques fixés sur une carte mère de fond de panier.

Les connecteurs électriques de fond de panier sont limités à la fois en densité et en contacts pour des raisons mécaniques et des problèmes d'encombrement, et en fréquence des signaux électriques transmis à cause des discontinuités de forme importantes situées au niveau des contacts. Ils constituent un véritable goulot d'étranglement pour les échanges d'informations entre cartes électroniques que la connectique optique doit permettre de contourner.

La connectique optique permet en effet de transmettre des signaux de fréquences très élevées, plusieurs gigahertz, actuellement limitées uniquement par les performances des interfaces électro-optiques. Elle permet aussi d'obtenir une division de puissance de signaux de très haute fréquence beaucoup plus facilement qu'en connectique électrique avec des coaxiaux ou des lignes triplaques.

On connaît, notamment par le modèle d'utilité allemand DE-U-85 08 153, un coupleur optique destiné à permettre l'insertion dans une liaison à fibre optique d'amplificateurs optoélectroniques pour la régénération du signal lumineux. Ce coupleur s'insère entre une première et une deuxième parties d'une liaison à fibre optique et est monté sur une plaque de circuit imprimé portant les éléments optoélectroniques d'un amplificateur régénérateur. Il est constitué de cinq fibres optiques suivant des cheminements différents, placées dans des rainures de guidage portées par une forme moulée insérée entre un couvercle et une plaque de fond. Une première fibre optique relie la première partie de la liaison à fibre optique à un connecteur pour récepteur optoélectronique. Une deuxième fibre optique relie en coupure les deux parties de la liaison à fibre optique. Une troisième fibre optique relie la première partie de la liaison à fibre optique à un connecteur pour émetteur optoélectronique. Une quatrième fibre optique relie la deuxième partie de la liaison à fibre optique au connecteur pour émetteur optoélectronique. Une cinquième fibre optique relie la deuxième partie de la liaison à fibre optique avec le connecteur pour récepteur optoélectronique. Un tel coupleur, qui présente un encombrement notable, n'est ni prévu ni adapté pour la connectique optique entre cartes électroniques logées dans un même boîtier.

D'ailleurs, la connectique optique entre cartes électroniques logées dans un même boîtier est encore peu utilisée. On connaît cependant des liaisons fil à fil par fibres optiques entre cartes. Il existe en effet des connecteurs monofibres qui s'intègrent dans des connecteurs électriques de fond de panier dans les alvéoles prévus pour des contacts coaxiaux ou de puissance. Ce type de liaisons par fibres optiques a l'inconvénient d'être unitaire, c'est-à-dire d'être réalisé point à point, d'être peu dense, assez délicat en positionnement.

On connaît également des liaisons optiques directes entre cartes électroniques d'un même boîtier grâce à des composants optoélectroniques placés en vue directe sur la tranche des cartes électroniques. Cette solution est peu critique dans la mesure où l'on utilise des faisceaux lumineux suffisamment divergents mais on est limité en distance par la puissance des faisceaux lumineux et en nombre de liaisons car les récepteurs optiques doivent être en vue directe des émetteurs optiques et ne pas se masquer.

On connaît aussi, notamment par la demande de brevet européen EP-A-0 237 237, une distribution de signal optique entre un empilement de cartes électroniques à l'aide d'un bus optique formé d'une fibre optique le long de laquelle sont étagés des coupleurs optiques de dérivation. Une telle distribution est assez limitée en possibilité et ne permet pas d'obtenir un réseau dense de liaisons optiques.

La présente invention a pour but la réalisation d'interconnexions optiques entre cartes électroniques d'un même coffret qui soient de densité élevée avec des couplages entrée-sortie non critiques.

Elle a pour objet un ensemble formé d'un empilement de cartes électroniques logées dans un boîtier présentant leurs tranches sur l'un au moins des bords de l'empilement dit bord de tranche et d'au moins une règle d'interconnexion optique. La ou lesdites règles d'interconnexion optique comportent :
- un profilé en U venant se placer en long, contre un bord de tranche de l'empilement de cartes électroniques et présentant un dos tourné vers les cartes électroniques, bordé de deux arêtes latérales et percé d'ouvertures échelonnées au pas d'espacement des cartes électroniques dans l'empilement et
- des fibres optiques qui sont disposées dans le profilé en U, entre ses arêtes latérales, et qui vont d'une ouverture à l'autre,
chaque ouverture percée dans le profilé en U et occupée par une ou plusieurs extrémités de fibre optique venant en regard d'un demi-connecteur optique monté sur la tranche d'une carte électronique de l'empilement.

Avec un ensemble de cartes électroniques enfichées par la tranche sur des connecteurs fixés sur un fond de panier, le profilé en U de la réglette peut être disposé soit sous le fond de panier à l'emplacement réservé aux coaxiaux et conducteurs de puissance, soit au dessus à côté de la rangée de connecteurs électriques, soit sur l'un des côtés ou même sur le dessus de l'empilement de cartes électroniques par rapport au fond de panier. Dans tous les cas, il réunit sous une forme compacte, aisément manipulable l'ensemble du câblage en fibres optiques du boîtier des cartes électroniques.

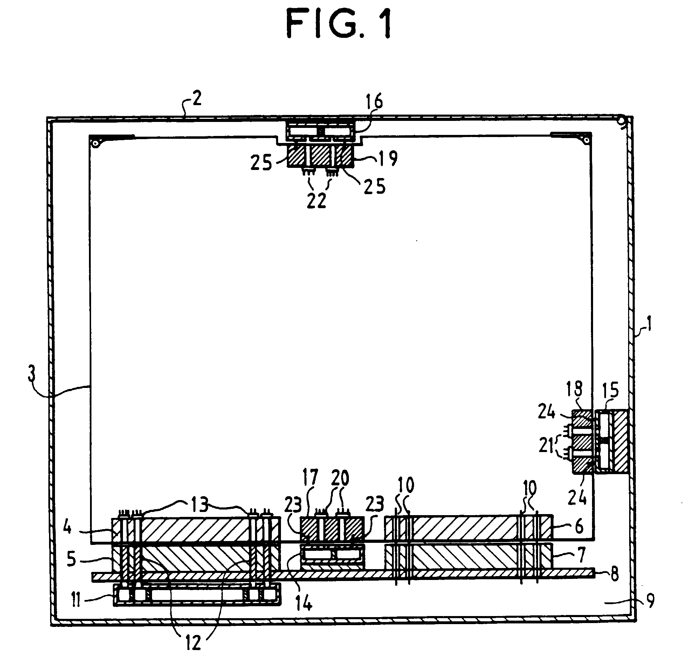

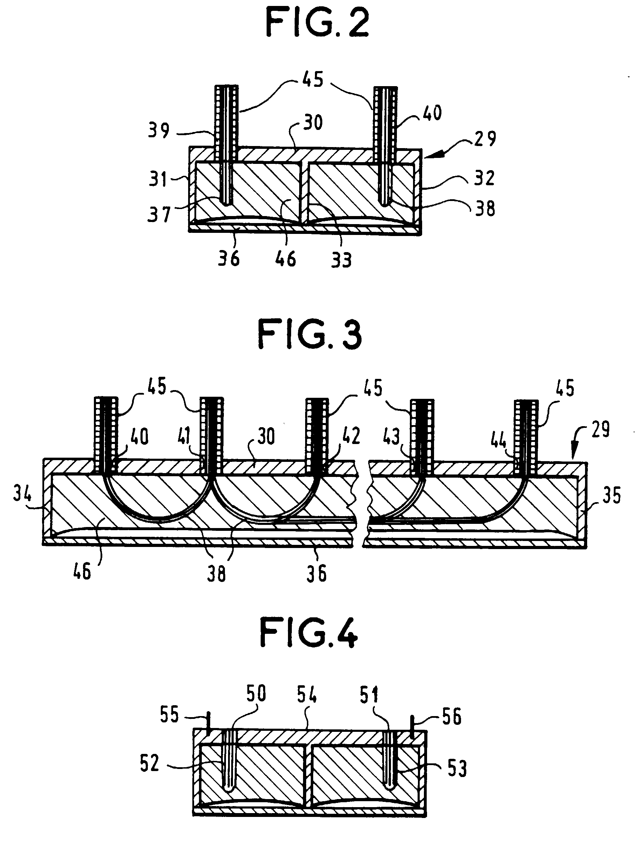

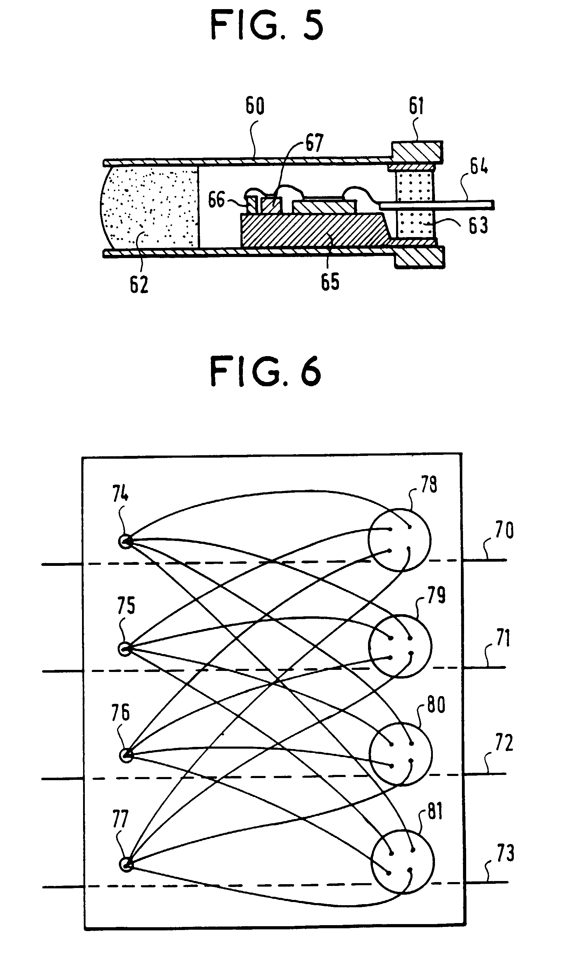

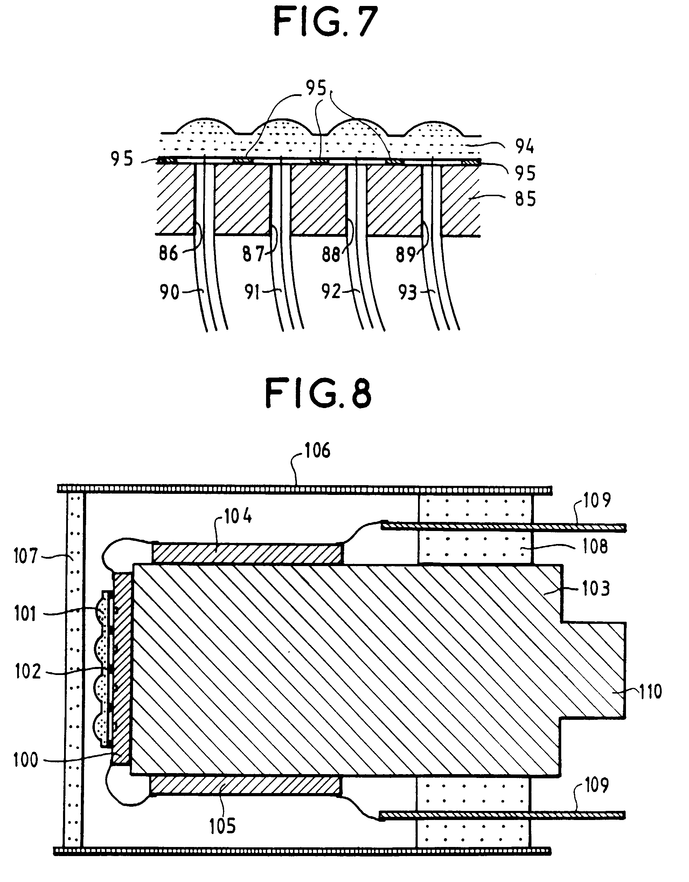

D'autres caractéristiques et avantages de l'invention ressortiront de la description de plusieurs modes de réalisation donnés à titre d'exemples. Cette description sera faite en regard du dessin dans lequel :
- une figure 1 représente, en coupe transversale, un coffret d'appareillage électronique pourvu de règles de connexion optique selon l'invention,
- des figures 2 et 3 représentent en coupes transversale et longitudinale, un type de règle de connexion selon l'invention,
- une figure 4 représente, en coupe transversale, un autre type de règle de connexion optique selon l'invention,
- une figure 5 représente une coupe longitudinale d'un émetteur ou récepteur optique adaptable aux entrées ou sorties optiques des règles d'interconnexion optique représentées aux figures 2, 3 et 4,
- une figure 6 représente, de manière schématique, un autre type de règle d'interconnexion optique selon l'invention,
- une figure 7 représente, en coupe, un réseau de sorties optiques d'une règle d'interconnexion optique du genre de celle représentée à la figure 6 et
- une figure 8 représente, en coupe longitudinale, un réseau d'émetteurs ou de récepteurs optiques adaptable à un réseau d'entrées ou de sorties optiques du genre de celui représenté à la figure 7.

On distingue sur la figure 1, la coupe transversale d'un coffret 1 d'appareillage électronique avec son couvercle pivotant 2. Ce coffret 1 renferme un empilement de cartes électroniques 3 dites cartes filles disposées dans des glissières non représentées et enfichées côte à côte par la tranche, au moyen de connecteurs électriques déboîtables 4, 5, 6 et 7 sur une carte de circuits imprimés 8 de fond de panier, dite carte mère, qui porte des conducteurs électriques réalisant des interconnexions électriques entre cartes filles. Un espace 9 laissé libre entre la carte mère 8 et le fond de coffret 1 sert de logement à des câbles coaxiaux et à des câbles de puissance qui complètent les interconnexions électriques réalisés sur la carte mère et qui aboutissent à des éléments de contact spécifiques disposés dans des alvéoles 10 de gros diamètre des connecteurs électriques débrochables 4, 5, 6, 7.

Les interconnexions électriques ainsi réalisées entre cartes filles 3, qui sont, comme on l'a vu précédemment, limitées en densité pour des raisons mécaniques et des problèmes d'encombrement des contacts, et en fréquence des signaux électriques transmis à cause des discontinuités importantes de forme au niveau des contacts, sont complétées par des interconnexions optiques. Ces dernières sont réalisées au moyen de fibres optiques disposées dans une règle amovible placée dans le coffret le long de l'empilement des cartes filles, et de dispositifs optoélectroniques de couplage placés sur les cartes filles. La règle peut être située sur ou sous la carte mère 8 ou encore sur le côté, le long d'un flanc du coffret 1 ou sur le haut sous le couvercle 2 du coffret 1. Elle présente des ouvertures qui donnent accès aux extrémités des fibres optiques et qui sont échelonnées au pas d'espacement des cartes filles 3 dans l'empilement.

Lorsque la règle 11 est située sous la carte mère 8, ses ouvertures donnant accès aux extrémités des fibres optiques sont prolongées par des canons de guidage 12 permettant de traverser la carte mère 8 et, éventuellement, le corps du connecteur électrique 5 qui lui est fixé, par des alvéoles prévus initialement pour des contacts de câbles coaxiaux ou de câbles de puissance, pour arriver au ras du corps du connecteur électrique 4 de la carte fille dont les alvéoles en regard renferment des dispositifs optoélectroniques de couplage 13.

Lorsque la règle 14, 15, 16 est située sur la carte mère entre les connecteurs électriques débrochables 5, 7, ou sur un flanc du coffret 1 ou encore sur le haut des cartes filles 3, sous le couvercle 2, elle peut être plate et avoir des ouvertures donnant accès aux extrémités de fibres optiques débouchant à ras de sa surface, en regard de demi-connecteurs optiques 17, 18, 19 qui sont fixés aux cartes filles 3 et qui présentent des alvéoles renfermant des dispositifs optoélectroniques de couplage 20, 21, 22.

Cette règle 14, 15, 16, facilement démontable, présente des pions 23, 24, 25 ou des trous de centrage permettant de la positionner correctement par rapport aux demi-connecteurs optiques 17, 18, 19 des cartes filles 3.

Les figures 2 et 3 représentent des coupes, en section transversale et en section longitudinale, d'une règle d'interconnexion optique prévue pour être placée sous une carte mère, le long d'un des bords de l'empilement de cartes électroniques filles 3 et pour distribuer entre les cartes électroniques filles deux signaux haute fréquence modulant chacun, par tout ou rien, un faisceau lumineux. Cette règle comporte un boîtier constitué d'un profilé en U 29 présentant une semelle 30 tournée vers les cartes électroniques filles et bordée de deux arêtes latérales 31, 32. Le volume intérieur du profilé en U est partagé par une cloison médiane 33 en deux canaux fermés par des parois d'extrémité 34, 35 et recouverts d'un couvercle 36.

Chaque canal sert au logement de fibres optiques 37, respectivement 38 affectées à la propagation de l'un des faisceaux lumineux. Son fond est percé d'ouvertures 39, respectivement 40, 41, 42, 43, 44 qui sont échelonnées au pas d'espacement des cartes filles 3 et qui donnent accès aux extrémités des fibres optiques 37, 38. Ces ouvertures 39, 40, 41, 42, 43, 44 sont prolongées extérieurement par des canons de guidage 45 entièrement traversés par les extrémités des fibres optiques 37, 38 dont les bouts sont sertis et polis à la manière habituelle pour former des entrées et sorties optiques.

Dans chaque canal, un faisceau de fibres optiques de l'ordre du millimètre de diamètre formé de quelques milliers de fibres optiques de très petit diamètre de l'ordre de quelques dizaines de microns part du canon de guidage de l'une 41 des ouvertures servant d'entrée optique et se divise en plusieurs sous faisceaux de quelques centaines de fibres optiques à destination des autres ouvertures 40, 42, 43, 44 servant de sorties optiques. On obtient ainsi, de manière très aisée, une répartition entre les différentes sorties optiques de la puissance du signal lumineux appliqué à l'unique entrée optique.

Une fois les fibres optiques 37, 38 mises en place, ces canaux sont remplis d'une matière ou d'une mousse plastique 46 qui immobilise les fibres optiques. La cloison médiane 33 évite toute diaphotie entre les deux faisceaux de fibres optiques 37, 38 affectés à la transmission de deux signaux optiques différents.

La figure 4 représente une coupe, en section transversale, d'une règle d'interconnexion optique prévue pour être disposée sur une carte mère entre les connecteurs électriques déboîtables sur lesquels viennent se placer les cartes filles, ou sur un flanc du coffret ou encore sur le dessus des cartes filles sous le couvercle du coffret et pour distribuer entre les cartes électroniques filles deux signaux haute fréquence modulant chacun par tout ou rien un faisceau lumineux. Cette règle diffère de la précédente par le fait que ses ouvertures 50, 51 donnant accès à des extrémités de fibres optiques 52, 53 ne sont pas prolongées par des canons de guidage mais débouchent directement sur la semelle 54 du profilé servant de boîtier et qu'elle comporte des picots de centrage 55, 56 permettant de positionner correctement ses ouvertures 50, 51 par rapport aux alvéoles des demi-connecteurs optiques des cartes filles qui viennent se placer en regard.

La figure 5 représente une coupe, en section longitudinale, d'un émetteur ou détecteur optoélectronique adaptable aux entrées ou sorties optiques des règles de connexion optiques qui viennent d'être décrites relativement aux figures 2, 3 et 4. Celui-ci comporte un boîtier tubulaire 60 de diamètre adapté à celui des alvéoles du corps de connecteur dans lequel il est logé. Ce boîtier tubulaire 60 est pourvu sur son extrémité arrière d'un épaulement 61 limitant son enfoncement dans l'alvéole. Il renferme dans son extrémité avant une lentille de verre 62 de diamètre supérieur à celui de l'ensemble des fibres optiques aboutissant sur les entrées et sorties optiques de la règle de connexion optique et dans son extrémité arrière, une perle de verre 63 servant de traversée isolante pour les bornes électriques 64. Un support semicylindrique 65 se terminant par un anneau emprisonnant la perle de verre 63 porte soit une diode électroluminescente ou laser disposée dans le plan focal de la lentille et ses amplificateur et préamplificateur électroniques d'émission, soit une diode Pin disposée face à la lentille et ses préamplificateur et amplificateur électroniques de réception. Dans le cas d'un laser, celui-ci est directement soudé sur le support semicylindrique 65. Dans le cas d'une diode Led ou Pin 66, celles-ci sont montées sur un cube de dissipation thermique 67 comportant en plus un plot de connexion relais.

Les principaux avantages de cette connectique multifibre par rapport à la connectique classique monofibre, même multimode, sont d'une part, qu'elle est beaucoup moins sensible au positionnement et d'autre part, que le faisceau de fibres optiques peut être divisé en sous-faisceaux permettant alors à un même émetteur lumineux d'envoyer de l'énergie lumineuse à plusieurs récepteurs lumineux, fonction que l'on ne sait que très difficilement réaliser en électrique pour des fréquences de 100 MHz à quelques gigahertz.

Ceci est particulièrement utile pour répartir le signal d'un même oscillateur local entre les différentes cartes électroniques d'un même coffret. Cette répartition peut être équiphase si on a pris soin d'utiliser des sous faisceaux de fibres optiques de longueur identique qui seront facilement repliés à l'intérieur de la règle.

Dans le cas où l'on a besoin d'une grande densité d'entrées ou de sorties optiques sur une même carte électronique fille, on les réalise chacune à l'aide d'une seule fibre optique en général multimode ou monomode pour les fréquences très élevées au lieu d'un sous faisceau de fibres optiques et on les dispose sur la semelle de la règle de connexion optique selon des réseaux avec un pas d'espacement interne de l'ordre de 0,1 à 1 mm. Le profilé en U de la règle constitue alors un véritable support de câblage qui peut être placé sur une machine très précise, du type câblage fil à fil de semiconducteurs, adaptée au problème des fibres optiques.

La figure 6 illustre le câblage d'une règle de connexion optique assurant l'interconnexion entre quatre cartes électroniques filles 70, 71, 72, 73 comportant chacune un émetteur optique et un ensemble de quatre récepteurs optiques devant être reliés aux émetteurs optiques des quatre cartes.

La règle de connexion optique comporte au niveau de chaque carte une entrée optique 74 respectivement 75, 76, 77 multifibre où aboutit un faisceau de quatre fibres optiques et un réseau 78 respectivement 79, 80, 81 de quatre sorties optiques monofibres où aboutissent quatre fibres en provenance des quatre entrées optiques multifibres 74, 75, 76, 77.

Au niveau d'une entrée optique 74, 75, 76 ou 77, les extrémités des fibres du faisceau peuvent être fondues ensemble comme cela se pratique dans la technique des coupleurs à fibres optiques ce qui permet d'améliorer le couplage d'entrée et l'homogénéité des sorties.

Chaque réseau de sorties optiques monofibres est constitué d'un réseau d'ouvertures percées dans la semelle de la réglette avec un pas d'espacement de l'ordre de 0,1 à 1 mm et traversées chacune par une extrémité de fibre optique, l'ensemble des extrémités de fibres optiques émergeant du réseau d'ouvertures étant coupées à ras puis polies collectivement. Devant chaque réseau d'ouvertures destiné à des entrées ou sorties optiques monofibres, on place un réseau de microlentilles de même pas d'espacement destiné à transformer le faisceau lumineux de sortie ou d'entrée d'une fibre optique en un faisceau plus large pratiquement parallèle, afin que la connexion soit moins sensible à un écart de positionnement.

Bien évidemment, lorsqu'il est nécessaire d'avoir un grand nombre d'entrées optiques au niveau d'une même carte électronique fille, et il est possible de regrouper les entrées optiques à ce niveau, sur la réglette, comme les sorties optiques, en un réseau régulier avec un pas d'espacement de l'ordre de 0,1 à 1 millimètre.

La figure 7 illustre un procédé de montage d'un réseau de microlentilles sur un réseau d'ouvertures où aboutissent des extrémités de fibres optiques. On distingue, en coupe, la semelle 85 d'une règle de connexion optique percée d'un réseau de quatre ouvertures 86, 87, 88, 89 régulièrement espacées dans lesquelles pénètrent les extrémités de quatre fibres optiques 90, 91, 92, 93, et le réseau de microlentilles 94 qui est positionnée, avec précision, face aux' extrémités des fibres optiques. Les réseaux de microlentilles 94 est obtenu de manière connue selon une technique analogue à celle de fabrication des circuits intégrés qui consiste à partir d'une plaquette de verre à faces planes parallèles, à déposer un masque d'insolation sélective formé de disques placés aux emplacements des futures lentilles, à insoler en dehors des disques avec des ultraviolets et puis à passer au four la plaquette de verre pour une recuisson au cours de laquelle les parties insolées aux ultraviolets se compriment ce qui entraîne, par effet mécanique, la formation de lentilles aux emplacements des disques.

Le positionnement précis du réseau de microlentilles 94 face au réseau d'ouvertures 86, 87, 88, 89 pour que chaque microlentille soit centrée sur une extrémité de fibre optique et sa fixation sur la semelle de la règle de connexion optique se fait par exemple grâce à une technique connue sous la dénomination anglo-saxonne "bump". Celle-ci consiste à isoler sur la surface extérieure de la semelle 85, entre les ouvertures du réseau, de petits plots conducteurs également reproduits sur la surface en vis-à-vis du réseau de microlentilles 94, à faire croître sur les plots conducteurs de la semelle des demi-microbilles de brasure étain-plomb par électrolyse, à mettre en place le réseau de microlentilles 94 sur la semelle 85, puis à provoquer par refusion une brasure 95 entre les plots de la semelle 85 et ceux du réseau de microlentilles 94, le centrage des deux pièces se faisant automatiquement en raison d'un effet de succion de la brasure étain-plomb tendant à rendre maximales les surfaces en regard des plots.

La figure 8 représente une coupe, en section transversale, d'un réseau d'émetteurs ou de détecteurs optoélectroniques adaptable à un réseau d'entrées ou de sorties optiques d'une règle de connexion optique tel que ceux décrits relativement à la figure précédente. Celui-ci comporte un réseau de diodes soit électroluminescentes ou lasers dans le cas d'émetteurs optiques, soit de type Pin dans le cas de récepteurs optiques réalisés sur un même substrat 100 en raison du faible pas d'espacement. Ce réseau de diodes est coiffé, pour des facilités de couplage avec un réseau d'entrées ou de sorties optiques, d'un réseau de microlentilles 101 positionné avec précision selon la technique précitée à l'aide de brasures 102 réalisées entre des plots conducteurs placés en regard. Le substrat 100 portant le réseau de diodes est disposé sur la face avant d'une semelle métallique 103 qui sert de radiateur thermique et de masse électrique. La semelle métallique 103 supporte aussi, sur ses faces latérales, des substrats 104, 105 où sont gravés des amplificateurs et préamplificateurs soit d'émission si on a affaire à un réseau de diodes électroluminescentes ou lasers soit de réception si on a affaire à un réseau de diodes Pin. L'ensemble formé de la semelle dissipatrice 103, des substrats 100, 104, 105 qu'elle supporte et du réseau de microlentilles 101 est placé dans un boîtier étanche de protection 106 pourvu sur sa face avant d'une lame de verre 107, placée devant le réseau de microlentilles 101, et fermé sur sa face arrière par une perle annulaire de verre 108 qui est traversée par des broches de contact 109 reliées aux bornes électriques des circuits gravés sur les substrats 104, 105, et par une patte 110 de la semelle dissipatrice 103 destinée à être reliée au plus court à une masse générale.

Le boîtier étanche 106, qui vient d'être décrit est plus particulièrement destiné à être logé dans un demi-connecteur optique spécifique, avec des pions de centrage, adapté à une règle de connexion optique plate, sans canons de guidage, disposée sur la carte mère de fond de panier entre les connecteurs électriques ou sur les côtés ou sur le haut de la tranche des cartes électroniques filles.

L'avantage de cette technologie de connexion monofibre réalisée à l'aide des réseaux d'entrées ou de sorties optiques monofibres est la possibilité d'augmenter considérablement la densité des connexions optiques par rapport à la technique des connexions optiques multifibres. Par contre elle ne se prête pas facilement à la division de puissance et nécessite, lorsqu'elle est employée seule, l'utilisation de coupleurs optiques standards reportés au fond du profilé de la règle de connexion optique.

Le cas particulier de connexions optiques mélangeant les connexions optiques monofibres et multifibres décrit en regard de la figure 6 est intéressant car il permet de réaliser facilement un crossbar optique électriquement commandable en munissant les réseaux de récepteurs optiques de circuits de sélection.

## Revendications

1. Ensemble formé d'un empilement de cartes électroniques (3) logées dans un boîtier présentant leurs tranches sur l'un au moins des bords de l'empilement dit bord de tranche et d'au moins une règle d'interconnexion optique, caractérisé en ce que la ou lesdites règles d'interconnexion optique comportent :
- un profilé en U (29) venant se placer en long, contre un bord de tranche de l'empilement de cartes électroniques (3) et présentant un dos (30) tourné vers les cartes électroniques (3), bordé de deux arêtes latérales (31, 32) et percé d'ouvertures (39,...,44) échelonnées au pas d'espacement des cartes électroniques (3) dans l'empilement et
- des fibres optiques (37, 38) qui sont disposées dans le profilé en U (29) et qui vont d'une ouverture (39,...,44) à une autre,
chaque ouverture (39,...,44) percée dans le fond (30) du profilé en U (29) et occupée par une ou plusieurs extrémités de fibre optique (37, 38) venant en regard d'un demi-connecteur optique monté sur la tranche d'une carte électronique (3) de l'empilement.

2. Ensemble selon la revendication 1, avec au moins une règle d'interconnexion optique destinée à coupler en parallèle plusieurs sorties optiques (40, 42, 43, 44) sur une entrée optique unique (41), caractérisé en ce que ladite règle comporte un faisceau de fibres optiques (38) provenant de ladite entrée optique (41) localisée dans une ouverture percée dans le fond (30) de son profilé (29) en regard d'un demi-connecteur optique monté sur la tranche d'une carte électronique (3) comportant un émetteur optoélectronique, et se divisant en sous faisceaux de fibres optiques allant chacun à l'une desdites sorties optiques (40, 42, 43, 44) localisées dans d'autres ouvertures percées dans le fond (30) de son profilé (29) en regard de demi-connecteurs optiques montés sur la tranche des cartes électroniques (3) et comportant des récepteurs optoélectroniques.

3. Ensemble selon la revendication 1, avec au moins une règle d'interconnexion optique destinée à coupler en parallèle et individuellement plusieurs entrées optiques à des groupes distincts de sorties optiques, caractérisé en ce que l'intérieur du profilé en U (29) de ladite règle est partagé par des cloisons longitudinales (33) en autant de canaux qu'il y a d'entrées optiques, chaque canal étant affecté au logement des fibres optiques (37, 38) reliant une entrée optique à son groupe de sorties optiques et ayant son fond percé d'ouvertures correspondant à ladite entrée optique et à son groupe de sorties optiques.

4. Ensemble selon la revendication 1, caractérisé en ce que les extrémités des fibres optiques (52, 53) débouchent au dos (54) du profilé d'une règle à ras des ouvertures (50, 51) percées dans son fond.

5. Ensemble selon la revendication 1, caractérisé en ce qu'une règle comporte des canons de guidage (45) qui sont fixés au dos (30) de son profilé (29) au débouché des ouvertures occupées par les extrémités des fibres optiques (37, 38).

6. Ensemble selon la revendication 5, caractérisé en ce que les extrémités des fibres optiques (37, 38) débouchent au dos (30) du profilé (29) d'une règle au ras des extrémités desdits canons de guidage (45).

7. Ensemble selon la revendication 5, avec des cartes électroniques (3) enfichées par la tranche sur des connecteurs électriques (5, 7) fixés sur un fond de panier (8), caractérisé en ce qu'une règle (11) avec canons de guidage (45) est disposée sous le fond de panier (8), ses canons de guidage (12) traversant le fond de panier (8) et les connecteurs électriques (5, 7) pour venir en regard des demi-connecteurs optiques fixés sur des cartes électroniques (3).

8. Ensemble selon la revendication 1, avec des cartes électroniques (3) enfichées par la tranche sur des connecteurs électriques (5, 7) fixés sur un fond de panier (8), caractérisé en ce qu'une règle d'interconnexion optique (14) est disposée sur le fond de panier (8) à côté des connecteurs électriques (5, 7).

9. Ensemble selon la revendication 1, avec des cartes électroniques (3) enfichées par la tranche sur des connecteurs électriques (5, 7) fixés sur un fond de panier (8), caractérisé en ce qu'une règle d'interconnexion optique (15) est disposée sur un côté de l'empilement de cartes électroniques (3), latéralement par rapport au fond de panier (3).

10. Ensemble selon la revendication 1, avec des cartes électroniques (3) enfichées par la tranche sur des connecteurs électriques (5, 7) fixés sur un fond de panier (8), caractérisé en ce qu'une règle d'interconnexion optique (16) est disposée sur le dessus de l'empilement de cartes électroniques (3), latéralement par rapport au fond de panier (8).

11. Ensemble selon la revendication 1, caractérisé en ce que ledit profilé comporte des moyens de centrage (23, 24, 25, 55, 56) permettant de le positionner correctement par rapport aux demi-connecteurs optiques (17, 18, 19) des cartes électroniques.

12. Ensemble selon la revendication 1, avec au moins une règle d'interconnexion optique destinée à coupler des sorties optiques multiples regroupées au niveau de la tranche d'une même carte électronique (3) avec des entrées optiques, caractérisé en ce que ladite règle comporte, pour les sorties optiques localisées au niveau de la tranche d'une même carte électronique (3), des ouvertures où aboutissent des extrémités de fibres optiques qui sont disposées en réseau avec un pas d'espacement de l'ordre de 0,1 à 1 millimètre et qui viennent en regard d'un réseau de récepteurs optoélectroniques avec le même pas d'espacement, réalisés sur un même substrat de circuit intégré.

13. Ensemble selon la revendication 1, avec au moins une règle d'interconnexion optique destinée à coupler des entrées optiques multiples regroupées au niveau de la tranche d'une même carte électronique (3) avec des sorties optiques, caractérisé en ce que ladite règle comporte, pour les entrées optiques localisées au niveau de la tranche d'une même carte électronique (3) des ouvertures où aboutissent des extrémités de fibres optiques qui sont disposées en réseau avec un pas d'espacement de l'ordre de 0,1 à 1 millimètre et qui viennent en regard d'un réseau d'émetteurs optoélectroniques avec le même pas d'espacement, réalisés sur un même substrat de circuit intégré.

14. Ensemble selon la revendication 12 ou la revendication 13, caractérisé en ce que ladite règle comporte sur son dos, en regard des réseaux d'ouvertures correspondant à des sorties ou entrées optiques localisées au niveau d'une même tranche de carte électronique (3), des réseaux (94) de microlentilles de couplage, les réseaux de récepteurs ou émetteurs optoélectroniques venant en regard étant également équipés de réseaux (101) de microlentilles de couplage pour augmenter les tolérances de positionnement au droit des couplages optiques.

15. Ensemble selon la revendication 1, caractérisé en ce que la ou lesdites règles de connexion optique comportent un matériau de remplissage (46) comblant les vides laissés à l'intérieur du profilé en U (29) par les fibres optiques (37, 38).

16. Ensemble selon la revendication 1, caractérisé en ce que la ou lesdites règles de connexion optique comportent un couvercle (36) refermant le volume du profilé (29).

17. Ensemble selon la revendication 1, caractérisé en ce que ledit profilé (29) est métallique.

18. Ensemble selon la revendication 1, caractérisé en ce que ledit profilé (29) est en une matière plastique renforcée d'un matériau composite.

19. Ensemble selon la revendication 12, avec au moins une règle d'interconnexion optique destinée à coupler une entrée optique à des sorties optiques regroupées au niveau des tranches de cartes électroniques (3) en réseaux avec un pas d'espacement de l'ordre de 0,1 à 1 millimètre, caractérisé en ce que ladite règle comporte un faisceau de fibres optiques qui provient de ladite entrée optique et dont chaque fibre va sur l'une des sorties optiques regroupées au niveau des tranches de cartes électroniques (3).

20. Ensemble selon la revendication 19, caractérisé en ce que les fibres du faisceau sont fondues entre elles au niveau de l'entrée optique.

21. Ensemble selon la revendication 1, caractérisé en ce que le demi-connecteur, qui vient en regard d'une ouverture percée sur le dos du profilé en U d'une règle de connexion optique et donnant accès à des fibres optiques, comporte un boîtier tubulaire (60) qui est fermé à une extrémité par une lentille (62) et qui renferme un support semi-cylindrique (65) se terminant par un anneau emprisonnant une perle de verre (63) servant de traversée isolante à des contacts électriques (64), et portant une diode laser, Led ou Pin (66) dans le plan focal de la lentille (62) et des circuits électroniques associés.

22. Ensemble selon la revendication 21, caractérisé en ce que la diode Led ou Pin (66) est montée sur le support semi-cylindrique par l'intermédiaire d'un petit cube de dissipation thermique (67).

23. Ensemble selon la revendication 1, comportant au moins une règle de connexion optique avec des entrées ou sorties optiques regroupées en réseaux, caractérisé en ce qu'un demi-connecteur optique vient en regard de chaque réseau d'entrée ou de sortie et comporte plusieurs diodes laser, Led ou Pin disposées en réseau de même configuration sur un même substrat (100).

## Patentansprüche

1. Anordnung, gebildet durch einen Stapel von in einem Gehäuse angeordneten Elektronikkarten (3), deren Ränder an wenigstens einer der Seiten des Stapels, die Randseite genannt wird, liegen, sowie durch wenigstens eine Leiste zur optischen Verbindung, dadurch gekennzeichnet, daß die Leiste oder Leisten zur optischen Verbindung enthält bzw. enthalten:
- ein U-Profilteil (29), das längs an einer Randseite des Stapels der Elektronikkarten (3) angeordnet ist und einen Rücken (30) aufweist, der den Elektronikkarten (3) zugewandt ist, von zwei seitlichen Stegen (31, 32) berandet ist und von Öffnungen (39, ..., 44) durchbrochen ist, die in der Schrittweite des Abstandes der Elektronikkarten (3) in dem Stapel angeordnet sind, und
- Lichtwellenleiter (37, 38), die in dem U-Profilteil (29) angeordnet sind und von einer Öffnung (39, ..., 44) zu einer anderen verlaufen,
wobei jede in dem Boden (30) des U-Profilteils (29) gebildete und von einem Ende oder mehreren Enden der Lichtwellenleiter (37, 38) besetzte Öffnung (39, ..., 44) gegenüber einem optischen Verbinderteil zu liegen kommt, das an dem Rand einer Elektronikkarte (3) des Stapels angebracht ist.

2. Anordnung nach Anspruch 1, mit wenigstens einer Leiste zur optischen Verbindung, die dafür vorgesehen ist, mehrere optische Ausgänge (40, 42, 43, 44) parallel mit einem einzigen optischen Eingang (41) zu verbinden, dadurch gekennzeichnet, daß die Leiste ein Bündel von Lichtwellenleitern (38) enthält, das von dem optischen Eingang (41) ausgeht, der in einer Öffnung angeordnet ist, die im Boden ihres Profilteils (29) gegenüber einem optischen Verbinderteil gebildet ist, das an dem Rand einer Elektronikkarte (3) angebracht ist, die einen optoelektronischen Geber aufweist, und das sich in Unterbündel von Lichtwellenleitern aufteilt, die jeweils zu einem der optischen Ausgänge (40, 42, 43, 44) laufen, die in anderen Öffnungen angeordnet sind, die in dem Boden (30) ihres Profilteils (29) gegenüber von optischen Verbinderteilen gebildet sind, die an dem Rand der Elektronikkarten (3) angebracht sind und optoelektronische Empfänger enthalten.

3. Anordnung nach Anspruch 1, mit wenigstens einer Leiste zur optischen Verbindung, die dafür vorgesehen ist, mehrere optische Eingänge parallel und individuell mit getrennten Gruppen von optischen Ausgängen zu verbinden, dadurch gekennzeichnet, daß das Innere des U-Profilteils (29) der Leiste durch Längstrennwände (33) in so viele Kanäle unterteilt ist, wie es optische Eingänge gibt, wobei jeder Kanal für die Aufnahme von Lichtwellenleitern (37, 38) bestimmt ist, die einen optischen Eingang mit seiner Gruppe von optischen Ausgängen verbinden, und wobei der Boden jedes Kanals mit Öffnungen versehen ist, die dem optischen Eingang und seiner Gruppe von optischen Ausgängen entsprechen.

4. Anordnung nach Anspruch 1, dadurch gekennzeichnet, daß die Enden (52, 53) der Lichtwellenleiter am Rücken (54) des Profilteils einer Leiste gegenüber den Öffnungen (50, 51) münden, die in deren Boden gebildet sind.

5. Anordnung nach Anspruch 1, dadurch gekennzeichnet, daß eine Leiste Führungsröhrchen (45) enthält, die an dem Rücken (30) ihres Profilteils (29) am Ausgang der Öffnungen befestigt sind, die von den Enden der Lichtwellenleiter (37, 38) besetzt sind.

6. Anordnung nach Anspruch 5, dadurch gekennzeichnet, daß die Enden der Lichtwellenleiter (37, 38) am Rücken (30) des Profilteils (29) einer Leiste gegenüber den Enden der Führungsröhrchen (45) münden.

7. Anordnung nach Anspruch 5, mit Elektronikkarten (3), die mit dem Rand in elektrische Verbinder (5, 7) eingesteckt sind, die an einem Zwischenboden (8) befestigt sind, dadurch gekennzeichnet, daß eine Leiste (11) mit Führungsröhrchen (45) unter dem Zwischenboden (8) angeordnet ist, wobei ihre Führungsröhrchen (12) den Zwischenboden (8) und die elektrischen Verbinder (5, 7) durchqueren, um gegenüber den optischen Verbinderteilen zu liegen zu kommen, die an den Elektronikkarten (3) befestigt sind.

8. Anordnung nach Anspruch 1, mit Elektronikkarten (3), die mit dem Rand in elektrische Verbinder (5, 7) eingesteckt sind, die an einem Zwischenboden (8) befestigt sind, dadurch gekennzeichnet, daß an dem Zwischenboden (8) auf der Seite der elektrischen Verbinder (5, 7) eine Leiste (14) zur optischen Verbindung angeordnet ist.

9. Anordnung nach Anspruch 1, mit Elektronikkarten (3), die mit dem Rand in elektrische Verbinder (5, 7) eingesteckt sind, die an einem Zwischenboden (8) befestigt sind, dadurch gekennzeichnet, daß an einer Seite des Stapels aus Elektronikkarten (3) seitlich des Zwischenbodens (3) eine Leiste (15) zur optischen Verbindung angeordnet ist.

10. Anordnung nach Anspruch 1, mit Elektronikkarten (3), die mit dem Rand in elektrische Verbinder (5, 7) eingesteckt sind, die an einem Zwischenboden (8) befestigt sind, dadurch gekennzeichnet, daß oberhalb des Stapels aus Elektronikkarten (3) seitlich des Zwischenbodens (8) eine Leiste (16) zur optischen Verbindung angeordnet ist.

11. Anordnung nach Anspruch 1, dadurch gekennzeichnet, daß das Profilteil Zentrierungsmittel (23, 24, 25, 55, 56) enthält, die es ermöglichen, dieses korrekt bezüglich der optischen Verbinderteile (17, 18, 19) der Elektronikkarten zu positionieren.

12. Anordnung nach Anspruch 1, mit wenigstens einer Leiste zur optischen Verbindung, die dafür vorgesehen ist, mehrere optische Ausgänge, die auf der Höhe des Randes derselben Elektronikkarte (3) zusammengefaßt sind, mit optischen Eingängen zu koppeln, dadurch gekennzeichnet, daß die Leiste für die optischen Eingänge, die auf der Höhe des Randes derselben Elektronikkarte (3) angeordnet sind, Öffnungen, zu denen die Enden der Lichtwellenleiter führen, aufweist, die als Gitter mit einer Abstandsschrittweite in der Größenordnung von 0,1 bis 1 mm angeordnet sind und die gegenüber einem Gitter von optoelektronischen Empfängern mit derselben Abstandsschrittweite zu liegen kommen, die auf demselben Substrat einer integrierten Schaltung gebildet sind.

13. Anordnung nach Anspruch 1, mit wenigstens einer Leiste zur optischen Verbindung, die dafür vorgesehen ist, mehrere optische Eingänge, die auf Höhe des Randes derselben Elektronikkarte (3) zusammengefaßt sind, mit optischen Ausgängen zu koppeln, dadurch gekennzeichnet, daß die Leiste für die optischen Eingänge, die auf der Höhe des Randes derselben Elektronikkarte (3) angeordnet sind, Öffnungen, zu denen die Enden der Lichtwellenleiter führen, aufweist, die als Gitter mit einer Abstandsschrittweite in der Größenordnung von 0,1 bis 1 mm angeordnet sind und die gegenüber einem Gitter von optoelektronischen Gebern mit derselben Abstandsschrittweite zu liegen kommen, die auf demselben Substrat einer integrierten Schaltung gebildet sind.

14. Anordnung nach Anspruch 12 oder Anspruch 13, dadurch gekennzeichnet, daß die Leiste an ihrem Rücken gegenüber den Gittern von Öffnungen, die auf Höhe des Randes einer Elektronikkarte (3) angeordneten optischen Ausgängen oder Eingängen entsprechen, Gitter (94) von Koppel-Mikrolinsen enthält, wobei die Gitter von in Gegenüberlage zu liegen kommenden optoelektronischen Empfängern oder Gebern ebenfalls mit Gittern (101) von Koppel-Mikrolinsen versehen sind, um die Positionierungstoleranzen am Ort der optischen Koppelungen zu erhöhen.

15. Anordnung nach Anspruch 1, dadurch gekennzeichnet, daß die Leiste oder Leisten zur optischen Verbindung ein Füllmaterial (46) enthält bzw. enthalten, das die von den Lichtwellenleitern (37, 38) im Inneren des U-Profilteils (29) freigelassenen Leerräume ausfüllt.

16. Anordnung nach Anspruch 1, dadurch gekennzeichnet, daß die Leiste oder Leisten zur optischen Verbindung eine Abdeckung (36) enthält bzw. enthalten, die das Volumen des Profilteils (29) abschließt.

17. Anordnung nach Anspruch 1, dadurch gekennzeichnet, daß das Profilteil (29) aus Metall besteht.

18. Anordnung nach Anspruch 1, dadurch gekennzeichnet, daß das Profilteil (29) aus einem Kunststoff besteht, der durch eine Verbundmaterial verstärkt ist.

19. Anordnung nach Anspruch 12, mit wenigstens einer Leiste zur optischen Verbindung, die dafür vorgesehen ist, einen optischen Eingang mit optischen Ausgängen zu verbinden, die auf der Höhe der Ränder von Elektronikkarten (3) als Gitter mit einer Abstandsschrittweite in der Größenordnung von 0,1 bis 1 mm zusammengefaßt sind, dadurch gekennzeichnet, daß die Leiste ein Bündel von Lichtwellenleitern enthält, das von dem optischen Eingang ausgeht und von dem jeder Leiter über einen der optischen Ausgänge läuft, die auf Höhe der Ränder der Elektronikkarten (3) zusammengefaßt sind.

20. Anordnung nach Anspruch 19, dadurch gekennzeichnet, daß die Leiter des Bündels auf Höhe des optischen Eingangs miteinander verschmolzen sind.

21. Anordnung nach Anspruch 1, dadurch gekennzeichnet, daß das Verbinderteil, das gegenüber einer Öffnung zu liegen kommt, die in dem Rücken des U-Profilteils einer Leiste zur optischen Verbindung gebildet ist und einen Zugang zu den Lichtwellenleitern ermöglicht, ein rohrförmiges Gehäuse (60) enthält, das an einem Ende durch eine Linse (62) verschlossen ist und einen halbzylindrischen Träger (65) einschließt, der als ein Ring endet, der eine Glasperle (63) umschließt, die als isolierende Durchführung für elektrische Kontakte (64) dient, und der eine Laserdiode, eine LED oder eine PIN-Diode (66) in der Brennpunktebene der Linse (62) sowie zugehörige elektronische Schaltungen trägt.

22. Anordnung nach Anspruch 21, dadurch gekennzeichnet, daß die LED oder PIN-Diode (66) auf dem halbzylindrischen Träger mittels eines kleinen Kubus (67) zur Wärmedissipation angebracht ist.

23. Anordnung nach Anspruch 1 mit wenigstens einer Leiste zur optischen Verbindung mit optischen Eingängen oder Ausgängen, die als Gitter zusammengefaßt sind, dadurch gekennzeichnet, daß ein optischer Halbleiter gegenüber jedem Eingangs- oder Ausgangsnetz zu liegen kommt und mehrere Laserdioden, LEDs oder PIN-Dioden aufweist, die als Gitter mit der gleichen Konfiguration auf demselben Substrat (100) angeordnet sind.

## Claims

1. Assembly formed by a stack of electronic cards (3) housed in a housing having their edges on at least one of the sides of the stack, termed edge side, and by at least one optical interconnection strip, characterized in that the said optical interconnection strip or strips comprise:
- a U-section (29) which will be placed length-wise against one edge side of the stack of electronic cards (3) and has a back (30) turned towards the electronic cards (3), the U-section being bordered by two flanges (31, 32) and drilled with apertures (39, ..., 44) spaced out at the spacing pitch of the electronic cards (3) in the stack; and
- optical fibres (37, 38) which are arranged in the U-section (29) and which run from one aperture (39, **...** , 44) to another,
each aperture (39, ..., 44) drilled in the bottom (30) of the U-section (29) and occupied by one or more optical-fibre (37, 38) ends which will face an optical half-connector mounted on the edge of an electronic card (3) of the stack.

2. Assembly according to Claim 1, with at least one optical interconnection strip intended to couple several optical outputs (40, 42, 43, 44) in parallel to a single optical input (41) characterized in that the said strip includes a bundle of optical fibres (38) which originates from the said optical input (41) located in an aperture drilled in the bottom (30) of its section (29) opposite an optical half-connector mounted on the edge of an electronic card (3) which includes an optoelectronic transmitter, the bundle being divided into sub-bundles of optical fibres each running to one of the said optical outputs (40, 42, 43, 44) located in other apertures drilled in the bottom (30) of its section (29) opposite optical half-connectors mounted on the edge of the electronic cards (3) and including optoelectronic receivers.

3. Assembly according to Claim 1, with at least one optical interconnection strip intended to couple, in parallel and individually, several optical inputs to separate groups of optical outputs, characterized in that the inside of the U-section (29) of the said strip is divided up by longitudinal partitions (33) into as many channels as there are optical inputs, each channel being assigned to housing the optical fibres (37, 38) connecting an optical input to its group of optical outputs and having its bottom drilled with apertures corresponding to the said optical input and to its group of optical outputs.

4. Assembly according to Claim 1, characterized in that the ends of the optical fibres (52, 53) emerge at the back (54) of the section of a strip flush with the apertures (50, 51) drilled in its bottom.

5. Assembly according to Claim 1, characterized in that a strip includes guide bushes (45) which are fixed to the back (30) of its section (29) at the point where the apertures which contain the ends of the optical fibres (37, 38) emerge.

6. Assembly according to Claim 5, characterized in that the ends of the optical fibres (37, 38) emerge at the back (30) of the section (29) of a strip flush with the ends of the said guide bushes (45).

7. Assembly according to Claim 5, with electronic cards (3) plugged by their edges into electrical connectors (5, 7) fixed on to a backplane (8), characterized in that a strip (11) with guide bushes (45) is positioned under the backplane (8), its guide bushes (12) passing through the backplane (8) and the electrical connectors (5, 7) to come opposite the optical half-connectors fixed on to electronic cards (3).

8. Assembly according to Claim 1, with electronic cards (3) plugged by their edges into electrical connectors (5, 7) fixed on to a backplane (8), characterized in that an optical interconnection strip (14) is positioned on the backplane (8) alongside the electrical connectors (5, 7).

9. Assembly according to Claim 1, with electronic cards (3) plugged by their edges into electrical connectors (5, 7) fixed on to a backplane (8), characterized in that an optical interconnection strip (15) is arranged on one side of the stack of electronic cards (3), laterally with respect to the backplane (8).

10. Assembly according to Claim 1, with electronic cards (3) plugged by their edges into electrical connectors (5, 7) fixed on to a backplane (8), characterized in that an optical interconnection strip (16) is arranged on the top of the stack of electronic cards (3), laterally with respect to the backplane (8).

11. Assembly according to Claim 1, characterized in that the said section includes centring means (23, 24, 25, 55, 56) enabling it to be correctly positioned with respect to the optical half-connectors (17, 18, 19) of the electronic cards.

12. Assembly according to Claim 1, with at least one optical interconnection strip intended to couple multiple optical outputs, which are grouped together on the edge of a given electronic card (3), to optical inputs characterized in that, for the optical outputs located on the edge of a given electronic card (3), the strip includes apertures in which ends of optical fibres terminate, these being arranged in an array with a spacing pitch of approximately 0.1 to 1 millimetre and which will lie opposite an array of optoelectronic receivers with the same spacing pitch and produced on the same integrated-circuit substrate.

13. Assembly according to Claim 1, with at least one optical interconnection strip intended to couple multiple optical inputs, which are grouped together on the edge of a given electronic card (3), to optical outputs characterized in that, for the optical inputs located on the edge of a given electronic card (3), the strip includes apertures in which ends of optical fibres terminate, these being arranged in an array with a spacing pitch of approximately 0.1 to 1 millimetre and which will lie opposite an array of optoelectronic transmitters with the same spacing pitch and produced on the same integrated-circuit substrate.

14. Assembly according to Claim 12 or Claim 13, characterized in that the said strip includes, on its back, opposite the arrays of apertures corresponding to optical outputs or inputs located on a given edge of an electronic card (3), arrays (94) of coupling microlenses, the arrays of optoelectronic receivers or transmitters lying opposite them also being equipped with arrays (101) of coupling microlenses in order to increase the optical-coupling positioning tolerances.

15. Assembly according to Claim 1, characterized in that the optical connection strip or strips include a filling material (46) which fills the voids left inside the U-section (29) by the optical fibres (37, 38).

16. Assembly according to Claim 1, characterized in that the optical connection strip or strips include a cover (36) which closes the volume within the section (29).

17. Assembly according to Claim 1, characterized in that the said section (29) is made of metal.

18. Assembly according to Claim 1, characterized in that the said section (29) is made of a plastic reinforced with a composite material.

19. Assembly according to Claim 12, with at least one optical interconnection strip intended to couple an optical input to optical outputs grouped together on the edges of electronic cards (3) in arrays with a spacing pitch of approximately 0.1 to 1 millimetre, characterized in that the said strip includes a bundle of optical fibres which originate from the said optical input and each fibre of which runs to one of the optical outputs grouped together on the edges of electronic cards (3).

20. Assembly according to Claim 19, characterized in that the fibres in the bundle are fused together at the optical input.

21. Assembly according to Claim 1, characterized in that the half-connector, which lies opposite an aperture drilled in the back of the U-section of an optical connection strip and giving access to optical fibres, includes a tubular housing (60) which is closed at one end by a lens (62) and which contains a semicylindrical support (65) which terminates in a ring retaining a glass bead (63) which serves as an insulating lead-in for electrical contacts (64) this support carrying a laser diode, an LED or a PIN diode (66) in the focal plane of the lens (62) and associated electronic circuits.

22. Assembly according to Claim 21, characterized in that the LED or PIN diode (66) is mounted on the semicylindrical support via a small heat-dissipating cube (67).

23. Assembly according to Claim 1, including at least one optical connection strip with optical inputs or outputs grouped together in arrays, characterized in that an optical half-connector lies opposite each input or output array and includes several laser diodes, LEDs or PIN diodes arranged in an array having the same configuration on the same substrate (100).
